(19) Europäisches Patentamt
European Patent Office
Office européen des brevets

(11) EP 1 541 646 B1

(12) EUROPEAN PATENT SPECIFICATION

(45) Date of publication and mention
of the grant of the patent:
**18.01.2012 Bulletin 2012/03**

(51) Int Cl.:
*C09D 17/00* [(2006.01)]     *C09B 67/20* [(2006.01)]
*C09D 11/00* [(2006.01)]     *C09B 67/46* [(2006.01)]

(21) Application number: **04028731.0**

(22) Date of filing: **03.12.2004**

(54) **Process for preparing a water-based pigment dispersion**

Verfahren zur Herstellung einer wässrigen Pigmentdispersion

Procédé de préparation d'une dispersion pigmentaire à base aqueuse

(84) Designated Contracting States:
**DE FR GB**

(30) Priority: **05.12.2003 JP 2003407812**
**03.06.2004 JP 2004165840**

(43) Date of publication of application:
**15.06.2005 Bulletin 2005/24**

(73) Proprietor: **KAO CORPORATION**
**Tokyo 103-8210 (JP)**

(72) Inventors:
• **Iwasaki, Toshiya**
**Wakayama-shi**
**Wakayama-ken (JP)**
• **Kano, Kenji**
**Sumida-ku (JP)**
• **Ueyama, Norio**
**Wakayama-shi**
**Wakayama-ken (JP)**

• **Koga, Yoshio**
**Wakayama-shi**
**Wakayama-ken (JP)**

(74) Representative: **HOFFMANN EITLE**
**Patent- und Rechtsanwälte**
**Arabellastraße 4**
**81925 München (DE)**

(56) References cited:
**EP-A- 0 710 706**

• **DATABASE WPI Section Ch, Week 200431**
**Derwent Publications Ltd., London, GB; Class**
**A97, AN 2004-334291 XP002320393 & JP 2004**
**051963 A (DAINIPPON INK & CHEM INC) 19**
**February 2004 (2004-02-19)**
• **DATABASE WPI Section Ch, Week 200427**
**Derwent Publications Ltd., London, GB; Class**
**A97, AN 2004-286939 XP002320394 & JP 2004**
**027040 A (DAINIPPON INK & CHEM INC) 29**
**January 2004 (2004-01-29)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a process for preparing a water-based pigment dispersion. More specifically, the present invention relates to a process for preparing a water-based pigment dispersion which can be suitably used, for instance, in a water-based ink for inkjet recording being capable of giving an ink mechanical energy generated by piezoelectric element or the like, and thermal energy generated by a heating member, thereby jetting the ink from a jetting head.

BACKGROUND OF THE INVENTION

Inkjet recording is a recording system for forming characters or images, comprising directly jetting ink droplets from very fine nozzles to a recording medium, and depositing the ink droplets on the recording medium. This system has some advantages such that the coloration is facilitated and that a plain sheet of paper can be used as a recording medium. Therefore, this system has been widely used in recent years.

In an ink for inkjet recording, a water-soluble dye has been used in order to prevent the nozzles from clogging. However, the water-soluble dye-based ink does not have sufficient water resistance and light fastness. When the water-soluble dye-based ink is used especially in a thermal jet-type ink, there are some disadvantages such that the dye is oxidized by the heat of the heater surface, that the ink is scorched on the heater surface, and that the jetting property is lowered. In order to eliminate these disadvantages, there have been proposed pigment-based inks being excellent in water resistance and light fastness.

As a process for preparing the pigment-based ink, there has been proposed, for instance, a process for preparing a pigment dispersion, comprising the steps of kneading and dispersing a resin neutralized with a basic substance and a pigment, adding an acid to the dispersion to allow the resin to precipitate on the pigment surface, neutralizing again the mixture with the basic substance, thereby maintaining the pigment in a finely dispersed state, and re-dispersing the pigment in an aqueous medium (see, for instance, Japanese Patent Publication No. JP-A-Hei 9-31360).

However, this process has some disadvantages that a complicated step for carrying out re-neutralization is required, and that an operation for washing a water-containing cake obtained is troublesome.

As an alternative process for preparing a pigment-based ink, there has been proposed a process having the steps of dissolving in an aqueous medium (i) a water-soluble resin prepared by neutralizing a hydrophobic resin having a crosslinkable functional group, a pigment and a crosslinking agent, or (ii) a water-soluble resin prepared by neutralizing a hydrophobic resin having a self-crosslinkable functional group and a pigment, and dispersing them; carrying out a crosslinking reaction of the water-soluble resin to deposit the crosslinked product on the surface of the pigment (see, for instance, Japanese Patent Publication No. JP-A-Hei 11-152424).

However, this process necessitates a high-temperature and high-pressure apparatus, and a troublesome procedure when carrying out the crosslinking reaction.

SUMMARY OF THE INVENTION

The present invention relates to a process for preparing a water-based pigment dispersion, having the steps of:

(A) mixing an emulsified composition containing a water-insoluble polymer having a salt-forming group, an organic solvent having a solubility of 5 to 40 parts by weight in 100 parts by weight of water at 20˚C, a neutralizing agent and water with a pigment so that the content of non-volatile components in the mixture of the emulsified composition and the pigment is 15 to 50% by weight, and the weight ratio of the organic solvent to water (weight of organic solvent/weight of water) is 0.1 to 0.9;
(B) dispersing the resulting mixture; and
(C) removing the organic solvent from the mixture.

DETAILED DESCRIPTION OF THE INVENTION

The present invention relates to a process capable of conveniently and stably preparing a water-based pigment dispersion which enables the formation of pigment particles having smaller particle diameters during the dispersion treatment of the pigment, and gives a printout having excellent gloss.

According to the present invention, there can be conveniently and stably prepared a water-based pigment dispersion which enables the formation of pigment particles having smaller particle diameters during the pigment dispersion, and gives a printout being excellent in gloss.

These and other advantages of the present invention will be apparent from the following description.

The term "content of non-volatile components" as used herein means a value obtained from the following equation:

$$[\text{Content of Non-Volatile Components}]$$

$$= [\text{Total Weight of Water-Insoluble Polymer Having Salt-Forming Group,}$$

$$\text{Neutralizing Agent and Pigment}]$$

$$\div [\text{Total Weight of Emulsified Composition and Pigment}]$$

$$\times 100.$$

(Water-Insoluble Polymer Having Salt-Forming Group)

A water-insoluble polymer having a salt-forming group (hereinafter simply referred to as "water-insoluble polymer") is used in order to increase its adsorbability to the pigment surface and dispersion stability in the water-based pigment dispersion. The water-insoluble polymer includes water-insoluble vinyl polymers, water-insoluble ester polymers, water-insoluble urethane polymers and the like. Among the water-insoluble polymers, the water-insoluble vinyl polymers are preferable.

Representative examples of the water-insoluble vinyl polymer include a water-insoluble vinyl polymer prepared by polymerizing a monomer composition containing a monomer having a salt-forming group, a hydrophobic monomer, a macromer, a nonionic hydrophilic monomer and the like (hereinafter simply referred to as a "monomer mixture").

The monomer having a salt-forming group includes anionic monomers and cationic monomers. Among them, the anionic monomers are preferable.

Examples of the anionic monomer include unsaturated carboxylic acid monomers, unsaturated sulfonic acid monomers, unsaturated phosphoric acid monomers, and the like.

The unsaturated carboxylic acid monomer includes, for instance, (meth)acrylic acid, styrenecarboxylic acid, maleic acid-based monomer, for example, at least one monomer selected from the group consisting of maleic anhydride, maleic acid, maleic acid monoesters, maleic acid monoamides, itaconic acid and the like. Those monomers can be used alone or in admixture of at least two kinds.

The term "(meth)acrylic acid" as used herein means acrylic acid, methacrylic acid or a mixture thereof.

The unsaturated sulfonic monomer includes, for instance, 2-(meth)acryloyloxyethanesulfonic acid, 2-(meth) acryloyloxypropanesulfonic acid, 2-(meth)acrylamide-2-alkyl (number of carbon atoms of which is 1 to 4)propanesulfonic acids, vinylsulfonic acid, styrenesulfonic acid and the like. Those monomers can be used alone or in admixture of at least two kinds.

The unsaturated phosphoric acid monomer includes, for instance, vinylphosphonic acid, vinyl phosphate, bis (methacryloxyethyl) phosphate, diphenyl-2-acryloyloxyethyl phosphate, diphenyl-2-methacryloyloxyethyl phosphate, dibutyl-2-acryloyloxyethyl phosphate, dibutyl-2-methacryloyloxyethyl phosphate and the like. Those monomers can be used alone or in admixture of at least two kinds.

Among the anionic monomers, the unsaturated carboxylic acid monomer is preferable, and acrylic acid and methacrylic acid are more preferable.

Examples of the cationic monomer include tertiary amine-containing unsaturated monomers, ammonium salt-containing unsaturated monomers and the like.

The tertiary amine-containing unsaturated monomer includes, for instance, N,N-dimethylaminoethyl (meth) acrylate, N,N-dimethylaminopropyl (meth)acrylate, N,N-diethylaminoethyl (meth)acrylate, N,N-dimethylaminopropyl (meth)acrylamide, N,N-dimethylarylamines, vinylpyrrolidone, 2-vinylpyridine, 4-vinylpyridine, 2-methyl-6-vinylpyridine, 5-ethyl-2-vinylpyridine and the like. Those monomers can be used alone or in admixture of at least two kinds.

The ammonium salt-containing unsaturated monomer includes, for instance, a quaternalized product of N,N-dimethylaminoethyl (meth)acrylate, a quaternalized product of N,N-diethylaminoethyl (meth)acrylate, a quaternalized product of N,N-dimethylaminopropyl (meth)acrylate and the like. Those monomers can be used alone or in admixture of at least two kinds.

Among the cationic monomers, N,N-dimethylaminoethyl (meth)acrylate, N,N-dimethylaminopropyl (meth)acrylate and vinylpyrrolidone are preferable.

The content of the monomer having a salt-forming group in the monomer mixture is preferably 1 to 50% by weight, more preferably 2 to 40% by weight, even more preferably 3 to 40% by weight from the viewpoint of dispersion stability of the resulting water-based pigment dispersion.

The hydrophobic monomer is used for improving water resistance, rubbing resistance and the like of the resulting water-based pigment dispersion.

The hydrophobic monomer includes, for instance, alkyl (meth)acrylates having 1 to 18 carbon atoms, such as octyl (meth)acrylate, decyl (meth)acrylate, dodecyl (meth)acrylate and stearyl (meth)acrylate; aromatic group-containing monomers such as styrene, $\alpha$-methylstyrene, vinyltoluene, vinylnaphthalene; and the like. Those monomers can be used alone or in admixture of at least two kinds.

The content of the hydrophobic monomer in the monomer mixture is preferably 5 to 93% by weight, more preferably 10 to 80% by weight, even more preferably 15 to 75% by weight from the viewpoint of optical density and dispersion stability of the water-based pigment dispersion.

The macromer includes a macromer having a polymerizable unsaturated group and a number-average molecular weight of 500 to 100000, preferably 1000 to 20000. The number-average molecular weight of the macromer is determined by gel permeation chromatography using chloroform containing 1 mmol/L dodecyldimethylamine as a solvent and polystyrene as a standard substance.

Representative examples of the macromer include styrenic macromers, silicone macromers and the like. Those can be used alone or in admixture.

Representative examples of the styrenic macromer include styrene homopolymers having a polymerizable functional group at one end and copolymers of styrene with the other monomer.

Representative examples of the silicone macromer include a silicone macromer represented by the formula (II-1):

$$CH_2=CR^5\text{-}COOC_3H_6\text{-}[Si(R^6)_2\text{-}O]_b\text{-}Si(R^6)_3 \qquad (II\text{-}1)$$

wherein $R^5$ is a hydrogen atom or methyl group; each of $R^6$ is independently a hydrogen atom or a lower alkyl group having 1 to 5 carbon atoms; and b is a number of 5 to 60;
a silicone macromer represented by the formula (II-2):

$$CH_2=CR^5\text{-}COO\text{-}[Si(R^6)_2\text{-}O]_b\text{-}Si(R^6)_3 \qquad (II\text{-}2)$$

wherein $R^5$, $R^6$ and b are the same as defined above;
a silicone macromer represented by the formula (II-3):

$$CH_2=CR^5\text{-}Ph\text{-}[Si(R^6)_2\text{-}O]_b\text{-}Si(R^6)_3 \qquad (II\text{-}3)$$

wherein Ph is a phenylene group; and $R^5$, $R^6$ and b are the same as defined above;
a silicone macromer represented by the formula (II-4):

$$CH_2=CR^5\text{-}COOC_3H_6\text{-}Si(OE)_3 \qquad (II\text{-}4)$$

wherein $R^5$ is the same as defined above; E is a group represented by the formula: $-[Si(R^5)_2\text{-}O]_c$-$Si(R^5)_3$ wherein $R^5$ is the same as defined above, and c is a number of 5 to 65;
and the like.

The content of the macromer in the monomer mixture is preferably 0 to 30% by weight, more preferably 1 to 25% by weight, and even more preferably 2 to 20% by weight from the viewpoint of suppressing scorching on the heater surface of the bubblejet inkjet printer, and from the viewpoint of dispersion stability of the water-based pigment dispersion.

The nonionic hydrophilic monomer includes, for instance, polyoxyalkylene glycol mono(meth)acrylates having a polyoxyalkylene group as a constituting unit, and the like. The number of repeat units of the oxyalkylene group is preferably 1 to 30, more preferably 2 to 25. The oxyalkylene group is preferably an oxyethylene group, oxypropylene group or a mixture thereof.

The content of the nonionic hydrophilic monomer in the monomer mixture is preferably 0 to 40% by weight, more preferably 5 to 30% by weight, and even more preferably 10 to 30% by weight from the viewpoint of increasing jetting stability and optical density.

The water-insoluble polymer can be easily prepared, for instance, by polymerizing a monomer mixture according to a polymerization method such as a solution polymerization method using water as a solvent in the presence of a polymerization initiator such as a radical polymerization initiator.

The weight-average molecular weight of the water-insoluble polymer is preferably 3000 to 300000, more preferably 4000 to 200000, and even more preferably 10000 to 100000 from the viewpoint of improvement in storage stability and jetting property of the water-based pigment dispersion, preventing the printer heads from scorching, and durability of printouts after printing.

The water-insoluble polymer has a salt-forming group. The salt-forming group can be introduced into the water-insoluble polymer by polymerizing a monomer mixture containing a monomer having a salt-forming group.

It is preferable that the salt-forming group of the water-insoluble polymer is neutralized with a neutralizing agent. As the neutralizing agent, an acid or a base can be used depending upon the kind of the salt-forming group. The acid includes, for instance, inorganic acids such as hydrochloric acid and sulfuric acid; and organic acids such as acetic acid, propionic acid, lactic acid, succinic acid, glycolic acid, gluconic acid, glyceric acid and polyethylene glycolic acid. The base includes, for instance, tertiary amines such as trimethylamine and triethylamine, ammonia, sodium hydroxide, potassium hydroxide and the like. The neutralization degree is not limited to specified ones. It is preferable that the water-based pigment dispersion is usually around neutrality. For instance, it is preferable that the pH of the water-based pigment dispersion is adjusted to 4.5 to 10.

The solubility of the water-insoluble polymer in water at $25°C$ is preferably at most 10% by weight, more preferably at most 5% by weight, even more preferably at most 1% by weight, after neutralization in a desired neutralization degree, from the viewpoint of dissolving or homogeneously dispersing the water-insoluble polymer in the organic solvent.

(Organic Solvent)

As the organic solvent, there may be used an organic solvent having a solubility of 5 to 40 parts by weight, preferably 10 to 30 parts by weight in 100 parts by weight of water at $20°C$.

One of the great features of the present invention resides in that the organic solvent has a specified solubility in water as described above. When the above-mentioned organic solvent is used, the dispersion stability of the pigment in the resulting water-based pigment dispersion can be improved. Although not wanting to be limited by theory, it is thought that the reason why the dispersion stability of the pigment is improved as described above is based upon the fact that a part of the above-mentioned organic solvent is dissolved in water, and the organic solvent dissolved in water wets the surface of the pigment upon mixing of the emulsified composition with the pigment, so that adsorbability of the water-insoluble polymer on the surface of the pigment is improved.

Examples of the organic solvent include alcoholic solvents, ketone solvents, ether solvents, aromatic hydrocarbon solvents, aliphatic hydrocarbon solvents, halogenated aliphatic hydrocarbon solvents and the like. The alcoholic solvent includes, for instance, 1-butanol, 2-butanol and the like. The ketone solvent includes, for instance, methyl ethyl ketone and the like. Those organic solvents can be used alone or in admixture of at least two kinds.

Among the organic solvents, methyl ethyl ketone is preferable in consideration of its safety and operability upon the removal of the solvent in the after treatment.

(Emulsified Composition)

The emulsified composition usable in the present invention contains the water-insoluble polymer, the organic solvent having a solubility of 5 to 40 parts by weight in 100 parts by weight of water at $20°C$, the neutralizing agent and water.

The amount of the water-insoluble polymer is preferably 0.1 to 160 parts by weight, more preferably 0.5 to 100 parts by weight, and even more preferably 1 to 50 parts by weight based on 100 parts by weight of water, from the viewpoint of stability of the emulsified composition. The content of the water-insoluble polymer in the emulsified composition is preferably 5 to 20% by weight from the viewpoint of stability of the emulsified composition.

The weight ratio of the organic solvent to water (the value of the weight of the organic solvent / weight of water when dispersing the mixture) is preferably at least 0.1 since the amount of the organic solvent dissolved in water is relatively reduced as the weight ratio becomes smaller, so that there is a tendency that the surface of the pigment cannot be sufficiently wetted. Also, the amount of the organic solvent to be minimally required for sufficiently wetting the pigment tends to increase as the amount of a non-volatile component, i.e. the pigment, increases. Therefore, it is more preferable that the weight ratio of the organic solvent to water is at least 0.2 from the viewpoint of sufficiently wetting the surface of the pigment with the organic solvent.

The amount of the organic solvent dissolved in water increases as the weight ratio of the organic solvent to water becomes large, so that the pigment can be sufficiently wetted. On the other hand, there is a tendency that the viscosity of the mixture increases, thereby making it difficult to sufficiently and homogeneously mix the mixture, and that an oil-in-water emulsified composition is phase-converted into a water-in-oil emulsified composition. Therefore, it is preferable that the weight ratio of the organic solvent to water is at most 0.9 from the viewpoint of suppressing the viscosity of the mixture so that the mixture can be sufficiently and homogeneously mixed, and preventing the phase-conversion of the oil-in-water emulsified composition into a water-in-oil emulsified composition. There is a tendency that the viscosity of the mixture increases as the content of the non-volatile component increases. Therefore, it is more preferable that the weight ratio of the organic solvent to water is at most 0.8.

From the above viewpoints, the weight ratio of the organic solvent to water is preferably 0.1 to 0.9, more preferably 0.2 to 0.8.

The content of water in the emulsified composition is preferably 20 to 90% by weight, more preferably 30 to 80% by weight from the viewpoint of stability of the emulsified composition and compatibility with the pigment. The content of the neutralizing agent in the emulsified composition is preferably 0.1 to 10% by weight from the viewpoint of the adjustment of the pH of the water-based pigment dispersion to a desired value.

The emulsified composition can be prepared by mixing the components mentioned above with each other in any manner. It is preferable that the water-insoluble polymer is dissolved or dispersed in the organic solvent, and thereafter the solution or dispersion is mixed with water and the neutralizing agent, from the viewpoint of making the emulsified composition homogeneous.

The temperature upon mixing the components with each other is not limited to a specified one. It is preferable that the temperature is usually 5° to 50°C.

The emulsified composition thus obtained by mixing the components with each other is an oil-in water emulsified composition in which water makes up a continuous phase.

(Mixing of Emulsified Composition with Pigment)

Next, the emulsified composition is mixed with the pigment.

The pigment can be any of an inorganic pigment and an organic pigment. In the present invention, the organic pigment is preferable from the viewpoint that the pigment can be easily dispersed.

The organic pigment includes, for instance, azo pigments, dis-azo pigments, phthalocyanine pigments, quinacridone pigments, isoindolinone pigments, dioxazine pigments, perylene pigments, perinone pigments, thioindigo pigments, anthraquinone pigments, quinophthalone pigments and the like.

Preferred examples of the organic pigment include C.I. Pigment Yellow 13, 74, 83, 109, 110, 128 and 151; C.I. Pigment Red 48, 57, 122, 184 and 188; C.I. Pigment Violet 19; C.I. Pigment Blue 15, 15:1, 15:2, 15:3, 15:4 and 16; C.I. Pigment Green 7 and 36; and the like.

The inorganic pigment includes, for instance, carbon black, extender pigments, metal oxides, metal sulfides, metal chlorides and the like. Among them, carbon black is preferable when the water-based pigment dispersion of the present invention is used in a black water-based ink. The carbon black includes furnace black, thermal lamp black, acetylene black, channel black and the like.

The extender includes, for instance, silica, calcium carbonate, talc and the like.

The amount of the pigment is preferably 1 to 90 parts by weight, more preferably 5 to 80 parts by weight, even more preferably 10 to 70 parts by weight, based on 100 parts by weight of the emulsified composition from the viewpoint of optical density and facilitation of incorporation of the pigment. The amount of the water-insoluble polymer is preferably 5 to 400 parts by weight, more preferably 10 to 150 parts by weight based on 100 parts by weight of the pigment from the viewpoint of attaining high optical density and excellent jetting stability.

Mixing of the emulsified composition with the pigment can be carried out, for instance, by adding the pigment to the emulsified composition, or adding the emulsified composition to the pigment. It is preferable that the pigment is added to the emulsified composition from the viewpoint of increasing productivity in view of bulk density of the pigment.

(Preparation of Water-Based Pigment Dispersion)

Next, the dispersion of the mixture obtained by mixing the emulsified composition with the pigment (hereinafter simply referred to as "mixture") is carried out. More specifically, the emulsified composition and the pigment are dispersed with each other.

Another feature of the present invention resides in that the mixture of the above-mentioned emulsified composition and the pigment is dispersed with each other. When the mixture obtained by mixing the emulsified composition with the pigment is dispersed as described above, the pigment can be homogeneously dispersed in the emulsified composition due to the existence of the organic solvent and water contained in the emulsified composition.

Accordingly, for instance, when the water-insoluble polymer-dissolved organic solvent is mixed with the pigment without using the above-mentioned emulsified composition, the pigment is less likely to be homogeneously dispersed in the organic solvent. Therefore, it is not easy to obtain an emulsified composition in which the pigment is homogeneously dispersed even though water is added afterwards.

Also, when water is previously mixed with the pigment, and the resulting mixture is then mixed with the water-insoluble polymer-dissolved organic solvent, it is not easy to obtain an emulsified composition in which the pigment is homogeneously dispersed as well as the above-mentioned method.

When the mixture is dispersed, the content of the non-volatile components in the above-mentioned mixture is adjusted to at least 15% by weight, preferably at least 18% by weight, and more preferably at least 20% by weight from the viewpoint of increasing dispersibility by increasing shearing force, making a particle diameter of the pigment smaller, and increasing production efficiency. In addition, the content of the non-volatile components in the above-mentioned mixture is adjusted to at most 50% by weight, preferably at most 40% by weight, and more preferably at most 35% by weight from the viewpoint of facilitating the mixing of the mixture with stirring so that the mixture has a homogeneous composition by reducing the viscosity of the mixture. From these viewpoints, the content of the non-volatile components in the above-mentioned mixture is 15 to 50% by weight, preferably 15 to 40% by weight, more preferably 18 to 40% by weight, even more preferably 18 to 35% by weight, and even more preferably 20 to 35% by weight.

Also, the weight ratio of the organic solvent to water (the value of the weight of the organic solvent / weight of water when dispersing the mixture) is preferably at least 0.1 since the amount of the organic solvent dissolved in water relatively decreases as the weight ratio becomes smaller, so that there is a tendency that the surface of the pigment cannot be sufficiently wetted. Also, the amount of the organic solvent to be minimally required for sufficiently wetting the pigment tends to increase as the amount of a non-volatile component, i.e. the pigment increases. Therefore, it is more preferable that the weight ratio of the organic solvent to water is at least 0.2 from the viewpoint of sufficiently wetting the surface of the pigment with the organic solvent.

In addition, the amount of the organic solvent dissolved in water increases as the weight ratio of the organic solvent to water becomes large, so that the pigment can be sufficiently wetted. On the other hand, there is a tendency that the viscosity of the mixture increases, thereby making it difficult to sufficiently and homogeneously mix the mixture, and that an oil-in-water emulsified composition is phase-converted into a water-in-oil emulsified composition. Therefore, the weight ratio of the organic solvent to water is preferably at most 0.9 from the viewpoint of suppressing the viscosity of the mixture so that the mixture can be sufficiently and homogeneously mixed, and suppressing the phase-conversion of the oil-in-water emulsified composition into a water-in-oil emulsified composition. Also, there is a tendency that the viscosity of the mixture becomes higher as the content of the non-volatile component increases. Therefore, the weight ratio of the organic solvent to water is more preferably at most 0.8.

From the above viewpoint, the weight ratio of the organic solvent to water is preferably 0.1 to 0.9, more preferably 0.2 to 0.8.

In addition, when the above-mentioned mixture is dispersed, a dispersion treatment can be carried out at least two times by reducing stepwise the weight ratio of the organic solvent to water. The dispersion treatment is carried out preferably at most 10 times, more preferably at most 5 times from the viewpoint of troublesomeness and productivity.

When the dispersion treatment is carried out two or more times, in the first dispersion step, the weight ratio of the organic solvent to water is preferably at least 0.5, more preferably at least 0.6 in order to sufficiently wet the surface of the pigment with the organic solvent, and the weight ratio is preferably at most 0.9, more preferably at most 0.8 in order to suppress the increase in viscosity of the mixture to suppress the phase inversion of the oil-in-water emulsified composition. From these viewpoints, the weight ratio of the organic solvent to water is preferably 0.5 to 0.9, more preferably 0.6 to 0.8. In the first dispersion step, when the dispersion treatment is carried out under the conditions such that the weight ratio of the organic solvent is high, the pigment can be favorably dispersed since the contact efficiency of the pigment with the water-insoluble polymer is improved.

After the first dispersion step, the weight ratio of the organic solvent to water can be adjusted. The adjusting method for the weight ratio is not limited to specified ones. The weight ratio may be adjusted by adding water or an organic solvent in some cases to the mixture, or evaporating the organic solvent or water from the mixture.

The second and subsequent dispersion steps can be carried out under the same conditions as the first dispersion step in connection with the weight ratio of the organic solvent to water. It is preferable that the second and subsequent dispersion steps can be carried out under the conditions that the weight ratio is reduced by at least 0.1 as compared to that of the first dispersion step since the content of the coarse grains after the pre-dispersion can be reduced.

In the final dispersion step, a dispersion treatment is preferably carried out under the condition that the weight ratio of the organic solvent to water is 0.1 to 0.5, more preferably 0.2 to 0.4.

When the above-mentioned mixture is dispersed, the dispersion treatment can be carried out at least two times by reducing the content of the non-volatile components stepwise. The dispersion treatment can be carried out preferably at most 10 times, more preferably at most 5 times from the viewpoint of troublesomeness and productivity.

When the dispersion treatment is carried out two or more times, in the first dispersion step, the content of the non-volatile components in the mixture is preferably at least 25% by weight, more preferably at least 30% by weight from the viewpoint of increasing shearing force, thereby increasing dispersibility, and making the particle diameter of the pigment smaller. The content of the non-volatile components in the mixture is preferably at most 50% by weight, more preferably at most 40% by weight from the viewpoint of preventing the viscosity of the mixture from becoming exceedingly high, thereby facilitating mixing of the mixture with stirring so that the mixture has a homogeneous composition. From these viewpoints, the content of the non-volatile components in the mixture of the first dispersion step is preferably 25 to 50% by weight, more preferably 25 to 40% by weight.

After the first dispersion step, the content of the non-volatile components in the mixture can be adjusted. A method for adjusting the content of the non-volatile components in the mixture is not limited to a specified one. The content of the non-volatile components in the mixture can be adjusted by adding water and/or an organic solvent to the mixture, or evaporating the organic solvent or water from the mixture.

The second and subsequent dispersion steps can be carried out under the same conditions as in the first dispersion step in connection with the content of the non-volatile components in the mixture. It is preferable that the second and subsequent dispersion steps are carried out under the conditions that the content of the non-volatile components in the mixture is reduced by at least 3% by weight as compared to that of the first dispersion treatment since the content of the coarse grains after the pre-dispersion can be reduced.

In the final dispersion step, the dispersion is preferably carried out under the condition that the content of the non-volatile components in the mixture is 15 to 25% by weight, more preferably 18 to 25% by weight. When the dispersion treatment is carried out two or more times by reducing stepwise the weight ratio of the organic solvent to water and the content of the non-volatile components in the mixture as described above, it is preferable that the weight ratio of the organic solvent to water and the content of the non-volatile components in the mixture are simultaneously reduced from the viewpoint of reducing the content of the coarse grains after pre-dispersion.

When dispersing the mixture, it is preferable that a pre-dispersion for the purpose of mixing the emulsified composition with the pigment, and a secondary dispersion for the purpose of adjusting the particle diameter of the pigment are carried out.

In the pre-dispersion, agitator-mixers which have been generally used, such as anchor impellers can be used. Among the mixer-agitators, high-speed agitator-mixers such as ULTRA DESPA (commercially available from ASADA IRON WORKS CO., LTD., trade name), Ebara MILDER (commercially available from Ebara Corporation, trade name), T.K. HOMO MIXER, T.K. PIPELINE HOMO MIXER, T.K. HOMO JETTOR, T.K. HOMOMIC LINE FLOW, T.K. FILMICS (hereinabove commercially available from TOKUSHU KIKA KOGYO CO. LTD., trade names), CLEARMIX (commercially available from MTECHNIQUE, trade name). K.D. MILL (commercially available from Kinetic Dispersion, trade name) and the like are preferable.

Since the particle diameter of the pigment in the pigment dispersion obtained is large after the mixture is dispersed in the pre-dispersion step, it is preferable that a secondary dispersion is carried out by further applying a shearing force to the mixture, to finely divide the pigment particles to have a desired particle diameter.

The means for applying a shearing force to the mixture in the secondary dispersion includes, for instance, kneaders such as roll-mills, kneaders and extruders, homovalve-type high-pressure homogenizers as represented by High-Pressure Homogenizer (commercially available from Izumi Food Machinery, trade name), and Mini Labo Model 8.3H (commercially available from Rannie, trade name); chamber-type high-pressure homogenizers such as Microfluidizer (commercially available from Microfluidics, trade name), Nanomizer (commercially available from Nanomizer, trade name), Ultimizer (commercially available from Sugino Machine LTD., trade name), Genus PY (commercially available from Hakusui Tech Co, LTD., trade name), DeBEE2000 (commercially available from Nippon BEE K.K., trade name); and the like, without limiting the present invention only to those exemplified ones. Among them, the high-pressure homogenizers are preferable from the viewpoint of finely dividing the pigment to have a smaller particle diameter.

The temperature at which the mixture is dispersed is not limited to specified ones. It is preferable that the temperature is usually 5° to 50°C.

It is desired that the dispersion of the mixture is carried out until the average particle diameter of the pigment after dispersion becomes preferably 0.01 to 0.17 $\mu$m, more preferably 0.03 to 0.15 $\mu$m from the viewpoint of dispersion stability.

The pigment dispersion is obtained by dispersing the mixture, and the water-based pigment dispersion can be obtained by removing the organic solvent from the pigment dispersion by a conventional method comprising removing a solvent under vacuum distillation or the like.

The water-based pigment dispersion obtained by the process of the present invention can be suitably used for a water-based ink for inkjet recording. The content of the water-based pigment dispersion (amount of solid content) in the water-based ink for inkjet recording is preferably 1 to 20% by weight, more preferably 3 to 15% by weight from the viewpoint of maintaining the properties of the ink. The content of water in the water-based ink for inkjet recording is preferably 40 to 95% by weight, more preferably 50 to 85% by weight from the viewpoint of maintaining the properties of the ink. The ink for inkjet recording may contain an additive such as a wetting agent, a dispersant, a defoaming agent, a chelating agent or a mildewproof agent as occasion demands.

EXAMPLES

The following examples further describe and demonstrate embodiments of the present invention. The examples are given solely for the purpose of illustration and are not to be construed as limitations of the present invention.

Preparation Example 1 (Preparation of Polymer A)

A reaction vessel was charged with 20 parts by weight of methyl ethyl ketone, 0.03 parts by weight of a polymerization chain transfer agent (2-mercaptoethanol), 2.5 parts by weight of polypropylene glycol monomethacrylate (number-average molecular weight: 375, commercially available from Aldrich, Japan K.K.), 1.2 parts by weight of methacrylic acid and 4.8 parts by weight of styrene monomer, and the mixture was mixed. Nitrogen gas replacement was sufficiently carried out in the reaction vessel to give a mixed solution.

On the other hand, a dropping funnel was charged with 22.5 parts by weight of polypropylene glycol monomethacrylate (number-average molecular weight: 375, commercially available from Aldrich, Japan K.K.), 10.8 parts by weight of methacrylic acid and 56.7 parts by weight of styrene monomer. Thereto were added 0.27 parts by weight of a polymerization chain transfer agent (2-mercaptoethanol), 60 parts by weight of methyl ethyl ketone and 1.2 parts by weight of 2,2'-azobis(2,4-dimethylvaleronitrile), and the mixture was mixed. Nitrogen gas replacement was sufficiently carried out in the dropping funnel to give a mixed solution.

The temperature of the mixed solution in the reaction vessel was raised to 65°C under nitrogen atmosphere with stirring the mixed solution. The mixed solution in the dropping funnel was gradually added dropwise to the reaction vessel over a period of 3 hours. 2 hours after the termination of the dropwise addition at 65°C, a solution prepared by dissolving 0.3 parts by weight of 2,2'-azobis(2,4-dimethylvaleronitrile) in 5 parts by weight of methyl ethyl ketone was added thereto, and the resulting mixture was aged at 65°C for 2 hours, and then at 70°C for 2 hours to give a polymer A in the form of a polymer solution. The weight-average molecular weight of the polymer A was 55000.

Preparation Example 2 (Preparation of Polymer B)

A reaction vessel was charged with 20 parts by weight of methyl ethyl ketone, 0.03 parts by weight of a polymerization chain transfer agent (2-mercaptoethanol), 2.5 parts by weight of polypropylene glycol monomethacrylate (number-average molecular weight: 375, commercially available from Aldrich, Japan K.K.), 1.4 parts by weight of methacrylic acid and 6.1 parts by weight of styrene monomer, and the mixture was mixed. Nitrogen gas replacement was sufficiently carried out in the reaction vessel to give a mixed solution.

On the other hand, a dropping funnel was charged with 22.5 parts by weight of polypropylene glycol monomethacrylate (number-average molecular weight: 375, commercially available from Aldrich, Japan K.K.), 12.6 parts by weight of methacrylic acid and 54.4 parts by weight of styrene monomer. Thereto were added 0.27 parts by weight of a polymerization chain transfer agent (2-mercaptoethanol), 60 parts by weight of methyl ethyl ketone, and 1.2 parts by weight of 2,2'-azobis(2,4-dimethylvaleronitrile), and the mixture was mixed. Nitrogen gas replacement was sufficiently carried out in the dropping funnel to give a mixed solution. The resulting mixed solution was treated in the same manner as in Preparation Example 1 to give a polymer B in the form of a polymer solution. The weight-average molecular weight of the polymer B was 60000.

Preparation Example 3 (Preparation of Polymer C)

A reaction vessel was charged with 43 parts by weight of methyl ethyl ketone, 0.54 parts by weight of a polymerization chain transfer agent (2-mercaptoethanol), 34.3 parts by weight of polypropylene glycol monomethacrylate (number-average molecular weight: 375, commercially available from Aldrich, Japan K.K.), 36.7 parts by weight of methacrylic acid and 46.5 parts by weight of styrene monomer, and the mixture was mixed. Nitrogen gas replacement was sufficiently carried out in the reaction vessel to give a mixed solution.

On the other hand, a dropping funnel was charged with 63.7 parts by weight of polypropylene glycol monomethacrylate (number-average molecular weight: 375, commercially available from Aldrich, Japan K.K.), 68.3 parts by weight of methacrylic acid and 86.5 parts by weight of styrene monomer. Thereto were added 1 part by weight of a polymerization chain transfer agent (2-mercaptoethanol), 125.1 parts by weight of methyl ethyl ketone and 6.14 parts by weight of 2,2'-azobis(2,4-dimethylvaleronitrile), and the mixture was mixed. Nitrogen gas replacement was sufficiently carried out in the dropping funnel to give a mixed solution.

The temperature of the mixed solution in the reaction vessel was raised to 77°C under nitrogen atmosphere with stirring the mixed solution. A solution prepared by dissolving 3.3 parts by weight of 2,2'-azobis(2,4-dimethylvaleronitrile) in 33 parts by weight of methyl ethyl ketone was added to the mixed solution in the reaction vessel over a period of 0.5 hours, and concurrently, the mixed solution in the dropping funnel was gradually added dropwise to the mixed solution in the reaction vessel over a period of 3 hours. After 0.5 hours passed from the termination of the dropwise addition at 77°C, a solution prepared by dissolving 8.4 parts by weight of 2,2'-azobis(2,4-dimethylvaleronitrile) in 84 parts by weight of methyl ethyl ketone was added thereto, and the resulting mixture was aged at 77°C for 3 hours, and then at 80°C for 1 hour to give a polymer C in the form of a polymer solution. The weight-average molecular weight of the polymer C was 37000.

The weight-average molecular weight of each polymer was determined by drying a part of the polymer solution at 105˚C for 2 hours under reduced pressure to remove the solvent for isolating the polymer, and performing gel permeation chromatography using polystyrene as a standard substance, and dimethylformamide containing 60 mmol/L phosphoric acid and 50 mmol/L lithium bromide as a solvent.

Example 1

The amount of 241 g of methyl ethyl ketone was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 477 g of ion-exchanged water was further added thereto. The mixture was mixed to give an emulsified composition of the polymer.

Further, 100 g of a phthalocyan pigment (C.I. Pigment Blue 15:4, commercially available from TOYO INK MFG. CO., LTD. under the trade name of LIONOL BLUE FG-7400-G) was added to the emulsified composition of the polymer, and the resulting mixture was pre-dispersed for 2 hours with a disper type impeller. The content of the non-volatile components in the dispersion was 22% by weight, and the weight ratio of the organic solvent to water was 0.5 at this point.

The resulting dispersion was passed through a high-pressure homogenizer (commercially available from Microfluidics Corp. under the trade name of Microfluidizer) 10 times as a dispersing operation under pressure of 200 MPa to give a pigment dispersion.

One-thousand grams of ion-exchanged water was added to the resulting pigment dispersion with stirring, and methyl ethyl ketone was removed from the dispersion at 60˚C under reduced pressure, and a part of water was further removed, thereby giving a water-based pigment dispersion, the solid content of which was 20% by weight.

The amount of 27.5 parts by weight of the resulting water-based pigment dispersion, 15.5 parts by weight of glycerol, 5 parts by weight of propylene glycol monobutyl ether, 3.5 parts by weight of triethylene glycol monobutyl ether, 0.3 parts by weight of a defoaming agent (commercially available from Air Products Japan, Inc. under the trade name of Surfynol 104), and 48.2 parts by weight of ion-exchanged water were mixed together. The resulting liquid mixture was filtered with a 25-mL needle-less syringe (commercially available from TERUMO CORPORATION) equipped with a filter having a pore diameter of 0.5 $\mu$m (acetyl cellulose membrane, outer diameter: 2.5 cm, commercially available from Fuji Photo Film Co., Ltd.), thereby removing coarse grains from the mixture to give a water-based ink for inkjet recording.

Example 2

The amount of 144 g of methyl ethyl ketone was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 432 g of ion-exchanged water was further added thereto. The mixture was mixed to give an emulsified composition of the polymer.

Further, 100 g of a quinacridone pigment (C.I. Pigment Red 122, commercially available from DAINIPPON INK & CHEMICALS, INC. under the trade name of Fastogen Magenta RY) was added to the emulsified composition of the polymer, and the resulting mixture was pre-dispersed for 2 hours with a disper type impeller. The content of the non-volatile components in the dispersion was 26% by weight, and the weight ratio of the organic solvent to water was 0.33 at this point.

The resulting mixture was treated in the same manner as in Example 1, to give a water-based pigment dispersion, the solid content of which was 20% by weight, and a water-based ink for inkjet recording.

Example 3

The amount of 178 g of methyl ethyl ketone was added to 100 g of the polymer B prepared by drying the polymer solution obtained in Preparation Example 2 under reduced pressure. To the resulting mixture was added 7.6 g of a neutralizing agent composed of a 48% aqueous sodium hydroxide to neutralize a salt-forming group of the polymer, and 293 g of ion-exchanged water was further added thereto. The mixture was mixed to give an emulsified composition of the polymer.

Further, 100 g of a phthalocyan pigment (C.I. Pigment Blue 15:3, commercially available from DAINIPPON INK & CHEMICALS, INC. under the trade name of TGR-SD) was added to the emulsified composition of the polymer, and the resulting mixture was pre-dispersed for 2 hours with a disper type impeller. The content of the non-volatile components in the dispersion was 30% by weight, and the weight ratio of the organic solvent to water was 0.6 at this point.

The resulting mixture was treated in the same manner as in Example 1, to give a water-based pigment dispersion, the solid content of which was 20% by weight, and a water-based ink for inkjet recording.

Example 4

Ninety grams of methyl ethyl ketone was added to 33.3 g of the polymer A prepared by drying the polymer solution obtained in Preparation Example 1 under reduced pressure. To the resulting mixture was added 3.1 g of a neutralizing agent composed of a 48% aqueous sodium hydroxide to neutralize a salt-forming group of the polymer, and 448 g of ion-exchanged water was further added thereto. The mixture was mixed to give an emulsified composition of the polymer.

Further, 100 g of a quinacridone pigment (C.I. Pigment Red 122, commercially available from DAINIPPON INK & CHEMICALS, INC. under the trade name of Fastogen Magenta RY) was added to the emulsified composition of the polymer, and the resulting mixture was pre-dispersed for 2 hours with a disper type impeller. The content of the non-volatile components in the dispersion was 20% by weight, and the weight ratio of the organic solvent to water was 0.20 at this point.

The resulting mixture was treated in the same manner as in Example 1, to give a water-based pigment dispersion, the solid content of which was 20% by weight, and a water-based ink for inkjet recording.

Example 5

The amount of 217 g of methyl ethyl ketone was added to 100 g of the polymer C prepared by drying the polymer solution obtained in Preparation Example 3 under reduced pressure. To the resulting mixture was added a neutralizing agent composed of 9 g of a 48% aqueous sodium hydroxide and 4.5 g of a 25% aqueous ammonia to neutralize a salt-forming group of the polymer, and 290 g of ion-exchanged water was further added thereto. The mixture was mixed to give an emulsified composition of the polymer.

Further, 150 g of a phthalocyan pigment (C.I. Pigment Blue 15:3, commercially available from DAINIPPON INK & CHEMICALS, INC. under the trade name of TGR-SD) was added to the emulsified composition of the polymer, and the resulting mixture was pre-dispersed for 3 hours with a disper type impeller. The content of the non-volatile components in the dispersion was 33% by weight, and the weight ratio of the organic solvent to water was 0.73 at this point.

Thereafter, 4.5 g of methyl ethyl ketone and 73 g of ion-exchanged water were added to the pre-dispersed mixture, and the resulting mixture was continuously pre-dispersed for 3 hours with a disper type impeller. The content of the non-volatile components in the dispersion was 30% by weight, and the weight ratio of the organic solvent to water was 0.60 at this point.

Further, 309 g of ion-exchanged water was then added to the pre-dispersed mixture, and the resulting mixture was continuously pre-dispersed for 1 hour with a disper type impeller. The content of the non-volatile components in the dispersion was 22% by weight, and the weight ratio of the organic solvent to water was 0.33 at this point.

The resulting mixture was treated in the same manner as in Example 1, to give a water-based pigment dispersion, the solid content of which was 20% by weight, and a water-based ink for inkjet recording.

Example 6

The amount of 183 g of methyl ethyl ketone was added to 100 g of the polymer C prepared by drying the polymer solution obtained in Preparation Example 3 under reduced pressure. To the resulting mixture was added a neutralizing agent composed of 9 g of a 48% aqueous sodium hydroxide and 4.5 g of a 25% aqueous ammonia to neutralize a salt-forming group of the polymer, and 242 g of ion-exchanged water was further added thereto. The mixture was mixed to give an emulsified composition of the polymer.

Further, 150 g of a phthalocyan pigment (C.I. Pigment Blue 15:3, commercially available from DAINIPPON INK & CHEMICALS, INC. under the trade name of TGR-SD) was added to the emulsified composition of the polymer, and the resulting mixture was pre-dispersed for 3 hours with a disper type impeller. The content of the non-volatile components in the dispersion was 37% by weight, and the weight ratio of the organic solvent to water was 0.73 at this point.

Thereafter, 40 g of methyl ethyl ketone and 121 g of ion-exchanged water were added to the pre-dispersed mixture, and the resulting mixture was continuously pre-dispersed for 3 hours with a disper type impeller. The content of the non-volatile components in the dispersion was 30% by weight, and the weight ratio of the organic solvent to water was 0.6 at this point.

Further, 425 g of ion-exchanged water was then added to the pre-dispersed mixture, and the resulting mixture was continuously pre-dispersed for 1 hour with a disper type impeller. The content of the non-volatile components in the dispersion was 20% by weight, and the weight ratio of the organic solvent to water was 0.28 at this point.

The resulting mixture was treated in the same manner as in Example 1, to give a water-based pigment dispersion, the solid content of which was 20% by weight, and a water-based ink for inkjet recording.

Comparative Example 1

The amount of 361 g of methyl ethyl ketone was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 357 g of ion-exchanged water was further added thereto. The mixture was mixed to give an emulsified composition of the polymer.

Further, 100 g of a phthalocyan pigment (C.I. Pigment Blue 15:4, commercially available from TOYO INK MFG. CO., LTD. under the trade name of LIONOL BLUE FG-7400-G) was added to the emulsified composition of the polymer. The content of the non-volatile components in the dispersion was 22% by weight, and the weight ratio of the organic solvent to water was 1.0 at this point. The phthalocyan pigment was added to this emulsified composition of the polymer. As a result, the viscosity of the dispersion was dramatically increased, so that the dispersion could not be homogeneously mixed with a disper type impeller.

Comparative Example 2

Sixty-two grams of methyl ethyl ketone was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 100 g of ion-exchanged water was further added thereto. The mixture was mixed to give an emulsified composition of the polymer.

Further, 100 g of a phthalocyan pigment (C.I. Pigment Blue 15:4, commercially available from TOYO INK MFG. CO., LTD. under the trade name of LIONOL BLUE FG-7400-G) was added to the emulsified composition of the polymer. The content of the non-volatile components in the dispersion was 55% by weight, and the weight ratio of the organic solvent to water was 0.6 at this point.

The phthalocyan pigment was added to this emulsified composition of the polymer. As a result, the viscosity of the dispersion was dramatically increased, so that the dispersion could not be homogeneously mixed with a disper type impeller.

Comparative Example 3

The amount of 611 g of methyl ethyl ketone was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 1218 g of ion-exchanged water was further added thereto. The mixture was mixed to give an emulsified composition of the polymer.

Further, 100 g of a phthalocyan pigment (C.I. Pigment Blue 15:4, commercially available from TOYO INK MFG. CO., LTD. under the trade name of LIONOL BLUE FG-7400-G) was added to the emulsified composition of the polymer, and the resulting mixture was mixed for 2 hours with a disper type impeller. The content of the non-volatile components in the dispersion was 10% by weight, and the weight ratio of the organic solvent to water was 0.5 at this point.

This mixture was further dispersed using a high-pressure homogenizer (commercially available from Microfluidics Corp. under the trade name of Microfluidizer).

The resulting dispersion was treated in the same manner as in Example 1 except that the step of adding ion-exchanged water was not employed, to give a water-based pigment dispersion, the solid content of which was 20% by weight, and a water-based ink for inkjet recording.

Comparative Example 4

The amount of 241 g of acetone (dissolved in water at 20˚C in a given ratio) was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 477 g of ion-exchanged water was further added thereto. The mixture was mixed to give an emulsified composition of the polymer.

Further, 100 g of a phthalocyan pigment (C.I. Pigment Blue 15:4, commercially available from TOYO INK MFG. CO., LTD. under the trade name of LIONOL BLUE FG-7400-G) was added to the emulsified composition of the polymer, and the resulting mixture was mixed for 2 hours with a disper type impeller. The content of the non-volatile components in the dispersion was 22% by weight, and the weight ratio of the organic solvent to water was 0.5 at this point.

The resulting mixture was very easily likely to be precipitated, and coarse grains were contained in a very large amount. The mixture was passed through a high-pressure homogenizer (commercially available from Microfluidics Corp. under the trade name of Microfluidizer) 10 times as a dispersing operation under pressure of 200 MPa.

The resulting dispersion was treated in the same manner as in Example 1, to give a water-based pigment dispersion, the solid content of which was 20% by weight, and a water-based ink for inkjet recording.

Comparative Example 5

The amount of 241 g of toluene was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer, and 477 g of ion-exchanged water was further added thereto. The mixture was mixed to give an emulsified composition of the polymer.

Further, 100 g of a phthalocyan pigment (C.I. Pigment Blue 15:4, commercially available from TOYO INK MFG. CO., LTD. under the trade name of LIONOL BLUE FG-7400-G) was added to the emulsified composition of the polymer, and the resulting mixture was mixed for 2 hours with a disper type impeller. The content of the non-volatile components in the dispersion was 22% by weight, and the weight ratio of the organic solvent to water was 0.5 at this point.

The resulting mixture was very easily likely to be precipitated, and coarse grains were contained in a very large amount. The mixture was passed through a high-pressure homogenizer (commercially available from Microfluidics Corp. under the trade name of Microfluidizer) 10 times as a dispersing operation under pressure of 200 MPa. The resulting dispersion was treated in the same manner as in Example 1, to give a water-based pigment dispersion, the solid content of which was 20% by weight, and a water-based ink for inkjet recording.

Comparative Example 6

The amount of 144 g of methyl ethyl ketone was added to 100 g of the polymer A prepared by drying the polymer solution obtained in Preparation Example 1 under reduced pressure. To the resulting mixture was added 7.6 g of a neutralizing agent composed of a 48% aqueous sodium hydroxide to neutralize a salt-forming group of the polymer to give a methyl ethyl ketone solution of the polymer A.

Further, 100 g of a quinacridone pigment (C.I. Pigment Red 122, commercially available from DAINIPPON INK & CHEMICALS, INC. under the trade name of Fastogen Magenta RY) was added to this methyl ethyl ketone solution of this polymer. Since a part of the pigment did not have sufficient wettability, the mixture formed into a lumpy mass, so that the mixture could not be homogeneously dispersed. Therefore, 432 g of ion-exchanged water was added to the mixture, and dispersed with a disper type impeller. However, the mixture yet remained in lumps.

The content of the non-volatile components in the dispersion was 26% by weight, and the weight ratio of the organic solvent to water was 0.33 at this point as calculated from the amounts of starting materials charged.

Next, the physical properties of the resulting water-based ink for inkjet recording were evaluated on the basis of the following methods. The results are shown in Table 1.

(1) Average Particle Diameter

Average particle diameter was determined with a laser particle analyzer system commercially available from Otsuka Denshi K.K. under the trade name of ELS-6100.

(2) Gloss

Solid image printing was carried out on commercially available MC Gloss Paper using an inkjet printer manufactured by SEIKO EPSON CORPORATION, (Model Number: EM900C), and the printed image was allowed to stand at 25˚C for 1 hour. Thereafter, its gloss was determined with a glossmeter (commercially available from Nippon Denshoku Kogyo K.K. under the trade name of HANDY GLOSSMETER, the product number: PG-1), and evaluated on the basis of the following evaluation criteria.

[Evaluation Criteria]

○: Gloss was at least 38.
△: Gloss was at least 35 and less than 38.
✕: Gloss was less than 35.

(3) Amount of Coarse Grains in Pigment Dispersion After Pre-Dispersion

A screw tube made of glass (diameter: 40 mm, length: 120 mm) was charged with 110 g of the pigment dispersion obtained in Examples 3, 5 or 6 after pre-dispersion, and the pigment dispersion was allowed to stand at room temperature for 1 hour. Thereafter, the height (mm) of the precipitate was determined, and this height was evaluated as an indication for the amount of coarse grains.

Table 1

| Ex. No. | Polymer | Pigment | Content of Non-Volatile Components (% by weight) | Organic Solvent/ Water (Weight Ratio) | Organic Solvent | Solubility (20˚C) *1 | Evaluation | | Pigment Dispersion *2 |
|---|---|---|---|---|---|---|---|---|---|
| | | | | | | | Water-Based Ink | | |
| | | | | | | | Average Particle Diameter ($\mu$m) | Gloss | Height of Precipitate (mm) |
| 1 | A | Cyan | 22 | 0.5 | MEK | 22.6 | 0.11 | 42 | - |
| 2 | A | Magenta | 26 | 0.33 | MEK | 22.6 | 0.15 | 40 | - |
| 3 | B | Cyan | 30 | 0.6 | MEK | 22.6 | 0.11 | 42 | 15 |
| 4 | A | Magenta | 20 | 0.2 | MEK | 22.6 | 0.14 | 43 | - |
| 5 | C | Cyan | 33$\rightarrow$30$\rightarrow$22 | 0.73$\rightarrow$0.6$\rightarrow$0.33 | MEK | 22.6 | 0.11 | 40 | 0 |
| 6 | C | Cyan | 37$\rightarrow$30$\rightarrow$20 | 0.73$\rightarrow$0.6$\rightarrow$0.28 | MEK | 22.6 | 0.11 | 41 | 0 |
| Comp. Ex. No. | | | | | | | | | |
| 1 | A | Cyan | 22 | 1 | MEK | 22.6 | - | - | - |
| 2 | A | Cyan | 55 | 0.6 | MEK | 22.6 | - | - | - |
| 3 | A | Cyan | 10 | 0.5 | MEK | 22.6 | 0.2 | 33 | - |
| 4 | A | Cyan | 22 | 0.5 | Acetone | Arbitrarily Mixed | 0.25 | 28 | - |
| 5 | A | Cyan | 22 | 0.5 | Toluene | 0.045 | 0.2 | 30 | - |
| 6 | A | Magenta | 26 | 0.33 | MEK | 22.6 | - | - | - |

(Note) MEK: methyl ethyl ketone *1: Solubility (parts by weight) of an organic solvent in 100 parts by weight of water at 20˚C *2: Pigment dispersion after pre-dispersion

EP 1 541 646 B1

From the results shown in Table 1, when the water-based pigment dispersion obtained in each of Examples is used, it can be seen that a water-based pigment dispersion having a smaller average particle diameter and being more excellent in gloss can be obtained as compared to that obtained in each of Comparative Examples 3 to 5. Further, it can be seen that the pigment dispersions obtained in Examples 5 and 6 have lowered amounts of coarse grains in the pigment dispersion after pre-dispersion as compared to the dispersion obtained in Example 3.

In addition, when the water-based pigment dispersion obtained in each of Examples is used, it can be seen that after-treatment can be easily carried out without the increase in viscosity during pre-dispersion as in the cases of Comparative Examples 1 and 2, or without the formation of lumpy mixture as in the case of Comparative Example 6.

The present invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1.  A process for preparing a water-based pigment dispersion, comprising the steps of:

    (A) mixing an emulsified composition comprising a water-insoluble polymer having a salt-forming group, an organic solvent having a solubility of 5 to 40 parts by weight in 100 parts by weight of water at 20°C, a neutralizing agent and water with a pigment so that the content of non-volatile components in the mixture of the emulsified composition and the pigment is 15 to 50% by weight, and the weight ratio of the organic solvent to water (weight of organic solvent/weight of water) is 0.1 to 0.9;
    (B) dispersing the resulting mixture; and
    (C) removing the organic solvent from the mixture.

2.  The process according to claim 1, wherein the mixture is dispersed two or more times, and the second and subsequent dispersion steps are carried out under the conditions that the weight ratio of the organic solvent to water is reduced by at least 0.1 as compared to the first dispersion step in the step (B).

3.  The process according to claim 1 or 2, wherein the mixture is dispersed two or more times, and the second and subsequent dispersion steps are carried out under the condition that the content of the non-volatile components is reduced by at least 3% by weight as compared to the first dispersion step in the step (B).

4.  The process according to any one of claims 1 to 3, wherein the pigment is added to the emulsified composition when the emulsified composition is mixed with the pigment in the step (A).

5.  The process according to any one of claims 1 to 4, wherein the water-insoluble polymer having a salt-forming group is prepared by polymerizing a monomer mixture comprising an anionic monomer.

6.  The process according to any one of claims 1 to 5, wherein the amount of the water-insoluble polymer having a salt-forming group is 0.1 to 160 parts by weight based on 100 parts by weight of water.

7.  The process according to any one of claims 1 to 6, wherein the mixture is dispersed with a high-pressure homogenizer in the step (B).

8.  The process according to any one of claims 1 to 7, wherein the organic solvent is methyl ethyl ketone.

9.  The process according to any one of claims 1 to 8, wherein the water-based pigment dispersion is used for a water-based ink for inkjet recording.

**Patentansprüche**

1.  Verfahren zur Herstellung einer wasserbasierten Pigmentdispersion, welches die Schritte umfasst:

    (A) Mischen einer emulgierten Zusammensetzung, die ein wasserunlösliches Polymer mit einer salzbildenden Gruppe, ein organisches Lösungsmittel mit einer Löslichkeit von 5 bis 40 Gew.-Teilen in 100 Gew.-Teilen Wasser bei 20°C, ein Neutralisierungsmittel und Wasser mit einem Pigment umfasst, so dass der Gehalt der nicht-flüchtigen Bestandteile in der Mischung der emulgierten Zusammensetzung und des Pigments 15 bis 50 Gew.% beträgt und das Gewichtsverhältnis des organischen Lösungsmittels zu Wasser (Gewicht des organischen Lösungsmittels/Gewicht von Wasser) 0,1 bis 0,9 beträgt;

(B) Dispergieren der entstandenen Mischung; und

(C) Entfernen des organischen Lösungsmittels von der Mischung.

2. Verfahren gemäß Anspruch 1, worin die Mischung zwei oder mehrere Male dispergiert wird und der zweite und die folgenden Dispersionsschritte unter Bedingungen ausgeführt werden, so dass das Gewichtsverhältnis des organischen Lösungsmittels zu Wasser um mindestens 0,1 im Vergleich zu dem ersten Dispersionsschritt in Schritt (B) reduziert wird.

3. Verfahren gemäß Anspruch 1 oder 2, worin die Mischung zwei oder mehrere Male dispergiert wird und der zweite und die folgenden Dispersionsschritte unter der Bedingung ausgeführt werden, so dass der Gehalt der nicht-flüchtigen Bestandteile um mindestens 3 Gew.% im Vergleich zu dem ersten Dispersionsschritt in Schritt (B) reduziert wird.

4. Verfahren gemäß einem der Ansprüche 1 bis 3, worin das Pigment zu der emulgierten Zusammensetzung gegeben wird, wenn die emulgierte Zusammensetzung mit dem Pigment in Schritt (A) gemischt wird.

5. Verfahren gemäß einem der Ansprüche 1 bis 4, worin das wasserunlösliche Polymer mit einer salzbildenden Gruppe durch Polymerisation einer Monomermischung, die ein anionisches Monomer umfasst, hergestellt wird.

6. Verfahren gemäß einem der Ansprüche 1 bis 5, worin die Menge des wasserunlöslichen Polymers mit einer salzbildenden Gruppe 0,1 bis 160 Gew.-Teile, bezogen auf 100 Gew.-Teile Wasser, beträgt.

7. Verfahren gemäß einem der Ansprüche 1 bis 6, worin die Mischung mit einem Hochdruckhomogenisierer in Schritt (B) dispergiert wird.

8. Verfahren gemäß einem der Ansprüche 1 bis 7, worin das organische Lösungsmittel Methylethylketon ist.

9. Verfahren gemäß einem der Ansprüche 1 bis 8, worin die wasserbasierte Pigmentdispersion für eine wasserbasierte Tinte für die Tintenstrahlaufzeichnung verwendet wird.

**Revendications**

1. Procédé de préparation d'une dispersion de pigment à base aqueuse, comprenant les étapes de :

(A) mélange d'une composition émulsionnée comprenant un polymère insoluble dans l'eau ayant un groupe de formation de sel, un solvant organique ayant une solubilité de 5 à 40 parties en poids dans 100 parties en poids d'eau à 20°C, un agent de neutralisation et de l'eau avec un pigment de manière à ce que la teneur de composants non volatiles dans le mélange de la composition émulsionnée et du pigment soit 15 à 50% en poids, et que le rapport en poids du solvant organique sur l'eau (poids de solvant organique/poids d'eau) soit 0,1 à 0,9 ;

(B) dispersion du mélange résultant ; et

(C) élimination du solvant organique du mélange.

2. Procédé selon la revendication 1, dans lequel le mélange est dispersé deux fois ou plus, et la deuxième étape de dispersion et les suivantes sont mises en oeuvre sous les conditions que le rapport en poids du solvant organique sur l'eau est réduit d'au moins 0,1 par rapport à la première étape de dispersion à l'étape (B).

3. Procédé selon la revendication 1 ou 2, dans lequel le mélange est dispersé deux fois ou plus, et la deuxième étape de dispersion et les suivantes sont mises en oeuvre sous la condition que la teneur des composants non volatiles est réduite d'au moins 3% en poids par rapport à la première étape de dispersion à l'étape (B).

4. Procédé selon l'une quelconque des revendications 1 à 3, dans lequel le pigment est ajouté à la composition émulsionnée lorsque la composition émulsionnée est mélangée avec le pigment à l'étape (A).

5. Procédé selon l'une quelconque des revendications 1 à 4, dans lequel le polymère insoluble dans l'eau ayant un groupe de formation de sel est préparé par polymérisation d'un mélange de monomères comprenant un monomère anionique.

6. Procédé selon l'une quelconque des revendications 1 à 5, dans lequel la quantité du polymère insoluble dans l'eau ayant un groupe de formation de sel est 0,1 à 160 parties en poids sur la base de 100 parties en poids d'eau.

7. Procédé selon l'une quelconque des revendications 1 à 6, dans lequel le mélange est dispersé avec un homogénéisateur haute pression à l'étape (B).

8. Procédé selon l'une quelconque des revendications 1 à 7, dans lequel le solvant organique est la méthyléthylcétone.

9. Procédé selon l'une quelconque des revendications 1 à 8, dans lequel la dispersion de pigment à base aqueuse est utilisée pour une encre à base aqueuse pour un enregistrement à jet d'encre.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI931360 A

- JP HEI11152424 A